(19) **Europäisches Patentamt European Patent Office Office européen des brevets**

(11) **EP 4 124 823 B1**

(12) **FASCICULE DE BREVET EUROPEEN**

(45) Date de publication et mention de la délivrance du brevet:
**05.11.2025 Bulletin 2025/45**

(51) Classification Internationale des Brevets (IPC):
**G01B 11/24** *(2006.01)* **B23Q 17/20** *(2006.01)*
**G04D 7/00** *(2006.01)* **B23Q 17/24** *(2006.01)*

(21) Numéro de dépôt: **22196988.4**

(22) Date de dépôt: **01.07.2016**

(52) Classification Coopérative des Brevets (CPC):
**G04D 7/004; B23Q 17/2471; G01B 11/2433;**
B23Q 17/249

(54) **PROCÉDÉ ET APPAREIL DE MESURE D'AU MOINS UNE DIMENSION D'UN OBJET**

**VERFAHREN UND VORRICHTUNG ZUM MESSEN MINDESTENS EINER ABMESSUNG EINES OBJEKTS**

**METHOD AND APPARATUS FOR MEASURING AT LEAST ONE DIMENSION OF AN OBJECT**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2015 EP 15174953**

(43) Date de publication de la demande:
**01.02.2023 Bulletin 2023/05**

(62) Numéro(s) de document de la (des) demande(s) initiale(s) en application de l'article 76 CBE:
**16177476.5 / 3 112 800**

(73) Titulaire: **ROLEX SA**
**1211 Genève 26 (CH)**

(72) Inventeurs:
 • **MOUGIN, Christian**
  **2504 BIENNE/BIEL (CH)**
 • **JACOT, Philippe**
  **2022 BEVAIX (CH)**
 • **PERRINJAQUET, Olivier**
  **2065 SAVAGNIER (CH)**

(74) Mandataire: **Moinas & Savoye SARL**
 **27, rue de la Croix-d'Or**
 **1204 Genève (CH)**

(56) Documents cités:
 DE-A1- 2 148 972  FR-A- 1 039 322
 JP-A- 2003 042 894  JP-A- S5 717 805
 JP-A- S6 491 007

## Description

L'invention concerne un procédé de mesure d'au moins d'une dimension d'un objet. Elle concerne aussi un dispositif de mesure. Elle concerne aussi un procédé de fabrication d'un objet mettant en œuvre le procédé de mesure.

Le développement des machines-outils poursuit un objectif d'amélioration de la précision, ce qui passe par la diminution des erreurs d'usinage. Comme un exemple parmi d'autres, on peut citer l'horlogerie mécanique, qui cherche toujours et encore à améliorer la précision de fabrication des composants afin d'améliorer la performance des mouvements et des rendements d'assemblage en production. D'autres exemples concernent les industries automobile, médicale, spatiale, aéronautique ou électronique.

Cette recherche d'amélioration est rendue difficile par les conditions de travail des machines-outils. Ceci est particulièrement vrai pour les décolleteuses, à cames ou à commande numérique, mais aussi pour toutes les autres machines utilisant un processus par enlèvement de matière, en particulier par formation de copeaux. Il s'avère difficile d'améliorer encore la précision intrinsèque de ces machines par les moyens usuels, comme l'optimisation de l'architecture ou la précision des guidages. En effet, les erreurs d'usinage résiduelles, comme les erreurs dues aux déformations thermiques, aux déformations statiques, à la non-répétabilité du repositionnement des éléments mobiles (dispositifs supportant les outils) et à l'usure des outils, ont atteint un seuil minimal qui paraît difficile à dépasser. Ces erreurs résiduelles restent cependant trop importantes pour certaines applications, telle que l'horlogerie.

Les machines-outils sont peu adaptées à l'amélioration des performances par l'implantation de capteurs in-situ, car ceux-ci sont extrêmement perturbés par l'environnement sévère provoqué par la présence du liquide de coupe et des copeaux. Plusieurs voies ont été explorées jusqu'ici pour améliorer les performances de répétabilité en utilisant des capteurs qui mesurent soit les pièces, soit la position des outils, soit certains éléments mobiles de la machine pendant la fabrication, et en exploitant ensuite ces mesures pour contrôler ou corriger la machine en temps réel.

Les machines-outils, telles que les décolleteuses (mais également les tours, les machines de transfert, etc..), comprennent en général un ou des dispositifs permettant de corriger les erreurs d'usinage constatées durant la production des pièces. Ces dispositifs sont soit des correcteurs numériques d'outils dans le cas d'une machine-outil à commande numérique, soit des dispositifs à vis micrométrique dans le cas de machines à cames. La ou les corrections se font en général manuellement par l'opérateur qui surveille la machine en production.

Il existe différents systèmes pour mesurer les éléments mobiles des machines, comme par exemple des capteurs de position que l'on monte sur les axes des machines, par exemple des capteurs inductifs LVDT ou des règles optiques. Toutefois ces capteurs ne mesurent pas directement les cotes de la pièce fabriquée.

Il existe également des solutions de mesure directe de la pièce comme par exemple des barrières laser, ou d'autres systèmes de jauges optiques, ou utilisant un autre principe physique. En principe, ce type de mesure fonctionne par déclenchement de contact. On « lit » alors la mesure sur les systèmes de suivi des axes de la machine-outil. Cette approche de mesure via les capteurs de suivi des axes ne permet pas d'atteindre les performances souhaitées. De plus, dans le cas de petites pièces, la plupart de ces solutions sont très « invasives » et donc particulièrement difficiles à mettre en œuvre.

En résumé, à cause de leurs défauts intrinsèques, aucune de ces solutions de mesure ne permet d'atteindre la résolution et la répétabilité nécessaires pour mesurer précisément les cotes ou les dimensions (diamètres, longueurs) d'un objet, et en particulier d'un composant horloger du type objet de révolution de taille millimétrique.

Le document JP2008102040 décrit un appareil de mesure permettant de mesurer le diamètre et la concentricité des différentes sections d'une pièce cylindrique, par rotation de la pièce. Aucune indication n'est donnée sur le positionnement de la pièce dans le système optique.

Le document FR2646904 décrit un procédé de mesure du diamètre d'un objet cylindrique le long de l'objet, par un déplacement vertical et un déplacement en rotation. Une illumination et un détecteur de type à une dimension sont utilisés. Le positionnement de l'objet dans le système ne fait pas l'objet d'une mention particulière.

Le document US2002041381 décrit un appareil de mesure du diamètre et de la concentricité d'un objet cylindrique, dans un système optique de type télécentrique, avec une combinaison de deux capteurs, l'un du type à une dimension, l'autre du type à deux dimensions. Le positionnement de l'objet dans le système n'est pas abordé.

Le document US2012194673 décrit un système de mesure de type microscope à réflexion, avec une table déplaçable selon l'axe optique afin d'acquérir une série d'images à différentes distances de travail. Cette série d'images permet de déterminer les points focaux des différents niveaux de la pièce ; une image est ensuite prise à chaque position z d'intérêt pour la mesure des dimensions d'intérêt.

JP2003042894A et JPS6491007A concernent la mesure optique d'un diamètre et d'une forme d'une fibre de verre mise en rotation alors qu'elle est plongée dans un liquide d'indice de réfraction proche de celui du verre constituant ladite fibre. FR1039322A concerne la mesure de pierres pour l'horlogerie par projection de lumière et visionnage via l'oculaire d'un microscope, la pierre étant plongée dans un récipient rempli d'un liquide.

DE 21 48 972 A1 décrit un appareil optique de mesure de pièces d'horlogerie avec capteur d'impulsion.

Le but de l'invention est de fournir un procédé de mesure permettant d'améliorer la précision de mesure des objets fabriqués, en particulier fabriqués par enlèvement de matière ou par dépôt de matière. En particulier, l'invention propose un procédé permettant de réaliser une mesure rapide, précise et fiable d'une dimension d'un objet de petite taille, c'est-à-dire de simplifier et fiabiliser la mesure d'une dimension d'un objet. De plus, l'invention propose un procédé permettant de réaliser une mesure précise de plusieurs dimensions du même objet de façon simultanée et rapide, dans l'environnement de fabrication, dans le liquide d'usinage, sans nettoyage préalable de l'objet.

Selon un premier aspect, un procédé de mesure selon l'invention est défini par la revendication 1.

Selon le premier aspect, différents modes d'exécution du procédé sont définis par les revendications dépendantes 2 à 7.

Selon le premier aspect, un dispositif de mesure selon l'invention est défini par la revendication 8.

Selon le premier aspect, différents modes de réalisation du dispositif de mesure sont définis par les revendications dépendantes 9 et 10.

Selon le premier aspect, un procédé de fabrication selon l'invention est défini par la revendication 11.

Le dessin annexé représente, à titre d'exemples, un mode de réalisation d'un dispositif selon l'invention et un mode d'exécution d'un procédé de mesure selon l'invention.

La figure 1 est un schéma d'un mode de réalisation d'un dispositif selon l'invention.
La figure 2 est une vue de côté d'une pièce devant être usinée et étant montée sur un posage de mesure.
La figure 3 est un graphique illustrant l'effet de la distance de travail sur la mesure apparente.
La figure 4 est un graphique illustrant l'effet de l'inclinaison sur la mesure apparente.
La figure 5 est un graphique illustrant l'effet de la combinaison de l'inclinaison et de la distance de travail sur la mesure apparente.
La figure 6 est un ordinogramme d'un mode d'exécution du procédé de mesure selon l'invention.
La figure 7 est un schéma d'un premier mode de réalisation d'une pièce d'horlogerie fabriquée selon l'invention.
La figure 8 est un schéma d'un deuxième mode de réalisation d'une pièce d'horlogerie fabriquée selon l'invention.

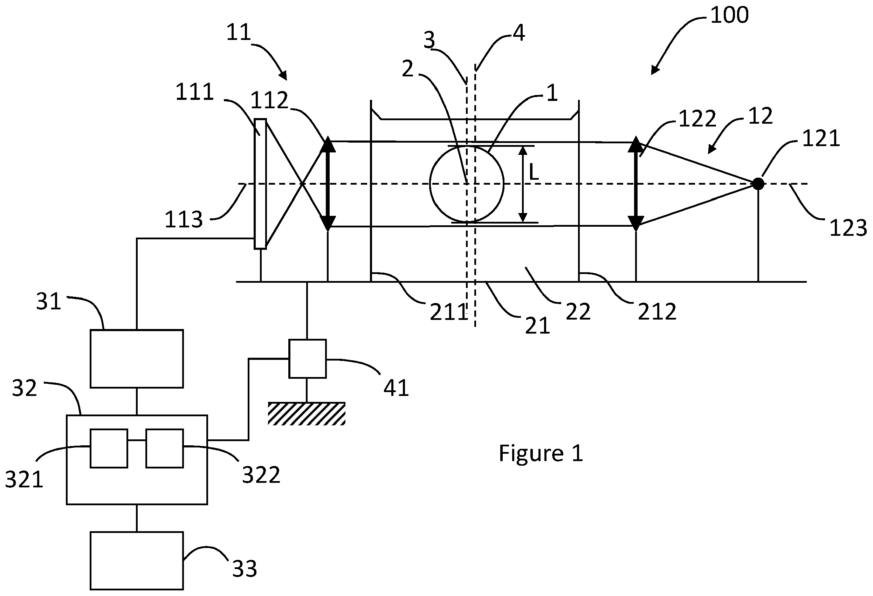

Un mode de réalisation d'un dispositif 100 de mesure d'une dimension L d'un objet 1 ou d'une pièce est décrit ci-après en référence à la figure 1. Le dispositif, ainsi que le procédé de mesure qui est décrit plus bas, sont particulièrement bien adaptés pour mesurer de petits composants, notamment des objets de révolution de taille millimétrique, notamment de moins de 10 mm, et pouvant être utilisés dans un environnement du type machine-outil. Le dispositif et le procédé sont particulièrement adaptés à la mesure de dimensions de composants horlogers.

On suppose que l'objet présente un premier axe 2, par exemple un axe de révolution. Le dispositif comprend :

- un premier système optique 11 présentant un axe optique 113, dénommé ci-après deuxième axe optique 113, et comprenant un capteur optique 111 associé à un objectif 112,
- un élément 31 d'acquisition de données issues du capteur optique,
- un élément 32 de traitement des données,
- un actionneur 41 ou élément de déplacement de l'objet relativement au premier système optique, notamment un élément de déplacement angulaire du premier axe relativement au deuxième axe et/ou un élément de déplacement de l'objet en rotation autour du premier axe et/ou un élément de translation de l'objet le long du deuxième axe.

Selon l'invention, le dispositif de mesure de la dimension L de l'objet 1, comprend, outre le premier système optique 11 comprenant un capteur optique 111 associé à un objectif 112 :

- un conteneur 21 contenant un liquide d'usinage 22, le conteneur comprenant au moins une paroi 211 transparente. Avantageusement, le dispositif de mesure comprend une source de lumière colimatée présentant un axe optique 123, dénommé ci-après troisième axe optique 123 ou un deuxième système optique 12 d'éclairage télécentrique comprenant une source lumineuse 121 associée à un objectif télécentrique 122 présentant un axe optique 123, dénommé ci-après troisième axe optique 123, notamment un troisième axe confondu avec le deuxième axe.

Le capteur optique peut être un capteur optique à deux dimensions ou une caméra CMOS ou une caméra CCD.

Les premier et deuxième axes sont avantageusement orthogonaux ou sensiblement orthogonaux.

Avantageusement, le capteur optique 111 est associé à un objectif télécentrique 112.

Le dispositif de mesure est prévu pour pouvoir fonctionner dans un environnement compatible à celui de l'usinage. Plus spécifiquement, le dispositif de mesure permet d'effectuer une mesure dynamique mettant en œuvre un mouvement relatif de l'objet par rapport au plan de mesure du capteur optique télécentrique 2D. Le dispositif de mesure est prévu pour fonctionner avec l'objet plongé dans un liquide. L'objet peut être supporté par un manipulateur qui permet des mouvements relatifs de celui-ci par rapport au plan de mesure du capteur. L'objet peut aussi être maintenu, par exemple par une broche de machine d'usinage ou par un préhenseur, alors que le capteur optique ou le dispositif de mesure est installé sur un élément 41 de déplacement ou actionneur lui permettant d'effectuer les mouvements relatifs du plan de mesure par rapport à la pièce.

Le dispositif de mesure est rempli de liquide, notamment d'huile de coupe ou de liquide d'usinage ou d'un autre fluide compatible ou de même nature que le fluide d'usinage sans dégradation de la mesure, à condition que le fluide soit propre et homogène. Ceci est rendu possible par le fait que des parois transparentes 211, 212, notamment formées par des plaques de verre optique placées de chaque côté du conteneur sont sensiblement, voire parfaitement identiques. Le dispositif devient ainsi symétrique d'un point de vue des indices de réfraction, ce qui a pour effet que tous les changements optiques subis par une lumière entrant dans le conteneur sont corrigés en ressortant.

L'élément de traitement 32 comprend un calculateur 321 et une mémoire 322. L'élément de traitement peut comprendre également des éléments de commande de l'actionneur 41.

Le dispositif de mesure peut aussi comprendre une interface homme-machine 33. L'élément de traitement 32 est alors relié à l'interface homme-machine 33. L'interface comprend notamment un élément d'affichage de la valeur calculée ou déterminée de la dimension L. L'élément peut également afficher toute autre donnée, notamment des valeurs apparentes de la dimension et/ou des dimensions et/ou de la valeur étalon. L'interface homme-machine peut encore comprendre un élément de saisie de données et de commandes.

L'élément d'acquisition et/ou l'élément de traitement peuvent être mis en œuvre dans un ordinateur. En particulier, l'élément d'acquisition peut comprendre un premier module logiciel et/ou l'élément de traitement peut comprendre un deuxième module logiciel. L'interface homme-machine 33 peut être l'interface homme-machine de l'ordinateur.

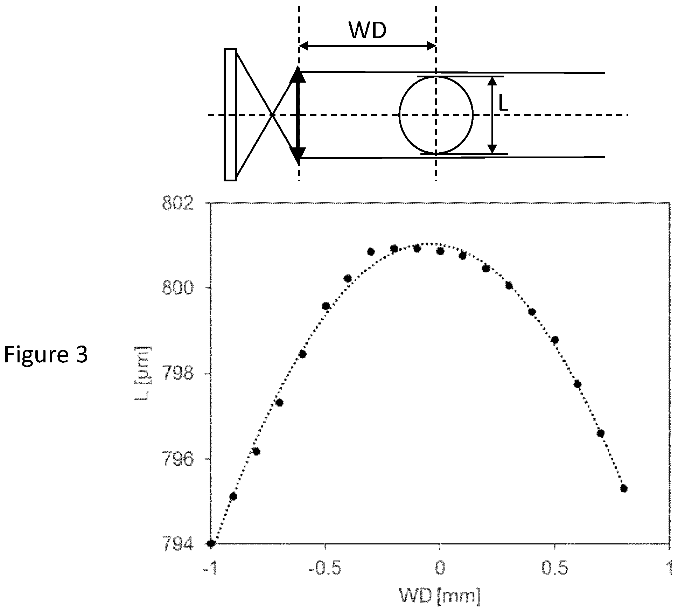

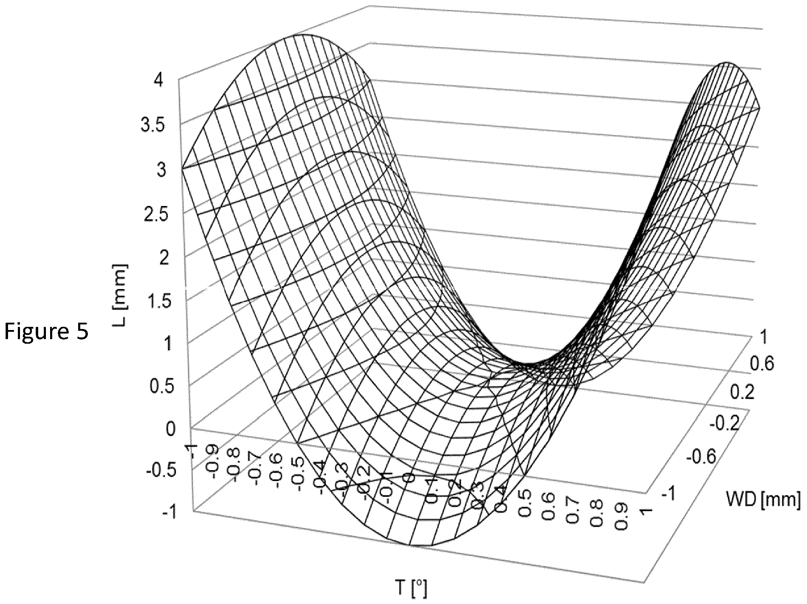

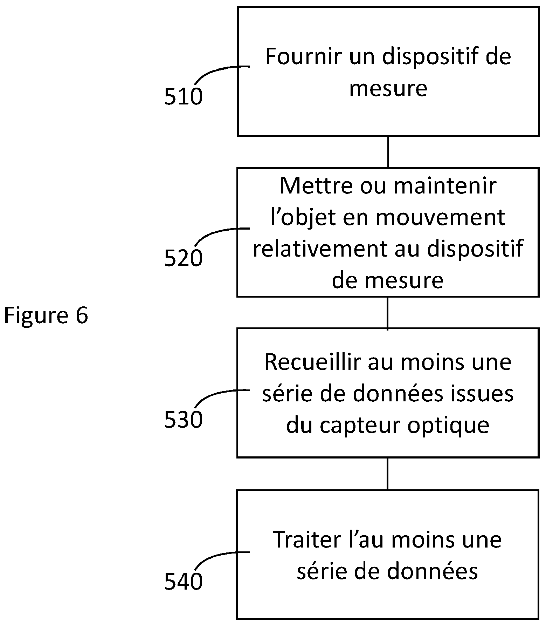

Un mode d'exécution d'un procédé de mesure d'une dimension L de l'objet 1 est décrit ci-après en référence aux figures 3 à 6.

On suppose que l'objet présente un premier axe 2, notamment un axe de révolution.

Le procédé comprend l'utilisation d'un dispositif de mesure tel que décrit précédemment, notamment l'utilisation du premier système optique 11 comprenant le capteur optique 111 et présentant le deuxième axe optique 113. Le premier système optique est agencé pour former sur le capteur 111 une image nette de l'objet.

Ainsi, dans une première étape 510 du procédé, on fournit le dispositif de mesure 100. Le dispositif de mesure est fourni *in situ,* c'est-à-dire que le dispositif de mesure est disposé et/ou positionné relativement à la pièce sans que le posage de celle-ci soit modifié par rapport à une machine, la pièce se trouvant en place sur la machine pour y subir une mise en forme par enlèvement de matière ou par dépôt de matière.

Le dispositif de mesure peut être fourni de façon à ce que la pièce puisse être mesurée après mise en forme par enlèvement de matière ou par dépôt de matière, par exemple pendant la mise en forme d'une ou des pièces suivantes. La machine est une machine d'usinage, notamment une décolleteuse.

Il est à noter que cette étape de fourniture du dispositif de mesure peut être exécutée à tout moment dans le processus de modification de la pièce sur la machine. Elle peut être exécutée avant même que la pièce ait subi une modification sur la machine. Elle peut alternativement ou complémentairement être exécutée entre deux modifications de la pièce sur la machine, par exemple entre deux phases d'usinage. Elle peut alternativement ou complémentairement être exécutée après que la pièce a subi une ou plusieurs modifications sur la machine.

Avantageusement, dans cette étape 510, on dispose, dans le conteneur du dispositif de mesure un liquide d'usinage ou un liquide de nature chimique similaire et/ou compatible, c'est-à-dire un liquide qui n'aura pas de conséquence sur la pièce ou sur le processus de mise en forme de la pièce mis en œuvre au sein de la machine après que la pièce aura été baignée dans ce liquide. Le dispositif de mesure est disposé relativement à la pièce et à la machine de sorte que la pièce baigne dans le liquide se trouvant dans le conteneur. La nature du liquide est de préférence telle que la pièce peut être baignée dans le liquide sans qu'un nettoyage préalable de la pièce ne soit nécessaire.

Le posage de la pièce est par exemple assuré à l'aide d'un ou plusieurs mandrins et/ou d'une ou plusieurs pinces et/ou d'une ou plusieurs broches et/ou d'un système de préhension, par exemple un système de préhension par vide.

Dans une deuxième étape 520, on maintient ou on met la pièce en mouvement relativement au dispositif de mesure, notamment relativement au premier système optique. Le mouvement comprend avantageusement un mouvement déplaçant la pièce en rotation autour du premier axe 2. De préférence, ce mouvement de la pièce est obtenu par rotation du ou des mandrins et/ou de la ou des pinces et/ou de la ou des broches et/ou du système de préhension mentionnés précédemment. Ce mouvement est par exemple produit par la machine. Alternativement, ce mouvement est produit par un dispositif auxiliaire à la machine. Alternativement ou complémentairement, un dispositif permet de déplacer le dispositif de mesure relativement à la pièce.

Complémentairement, la pièce peut être déplacée de sorte que son premier axe 2 soit déplacé angulairement relativement au deuxième axe 113, notamment autour d'un quatrième axe 3 ou autour d'un axe sensiblement parallèle à ce quatrième axe 3. De préférence, ce déplacement comprend un balayage angulaire d'un secteur de sorte que durant ce balayage, le premier axe 2 et le deuxième axe 113 se trouvent au moins transitoirement orthogonaux. Ce mouvement est par exemple produit par la machine. Alternativement, ce mouvement est produit par un dispositif auxiliaire à la machine. Alternativement ou complémentairement, l'actionneur 41 peut permettre de déplacer le dispositif de mesure relativement à la pièce.

Complémentairement encore, la pièce peut être déplacée en translation selon le long du deuxième axe 113 relativement au dispositif de mesure, en particulier relativement au premier système optique 11. De préférence, ce déplacement comprend un balayage d'un segment de sorte que durant ce balayage, la pièce se trouve au moins transitoirement à une distance de travail optimale du premier système optique 11. Ce mouvement est par exemple produit par la machine. Alternativement, ce mouvement est produit par un dispositif auxiliaire à la machine. Alternativement ou complémentairement, l'actionneur 41 du dispositif de mesure peut permettre de déplacer le dispositif de mesure relativement à la pièce.

Dans une troisième étape 530, on recueille au moins une série de données issues du capteur optique alors que l'objet est en mouvement relativement au premier système optique, comme expliqué précédemment. En effet, les données d'éclairement reçues, à différents instants, au niveau des différents pixels du capteur optique 111, sont transmises à l'élément 31 d'acquisition de données. En sortie de cet élément d'acquisition, on obtient au moins une série de données comprenant plusieurs valeurs ou cotes apparentes de la au moins une dimension L que l'on souhaite quantifier. Les traitements ayant lieu au niveau de cet élément d'acquisition sont connus de l'homme du métier. Ils permettent de déterminer une distance séparant deux pixels du capteur optique correspondant à l'image de deux bords ou de deux éléments caractéristiques de la pièce, et de déduire de cette distance une cote apparente d'une dimension de la pièce compte tenu du système optique, notamment de l'objectif 112. En d'autres termes, une série de données correspond à une série de cotes apparentes d'une dimension correspondant à différentes positions relatives de la pièce par rapport au premier système optique.

De manière avantageuse, l'élément 41 de déplacement de l'objet 1 relativement au premier système optique permet de mettre en mouvement l'objet à une vitesse constante ou sensiblement constante durant l'étape 530. De préférence, l'élément 41 de déplacement de l'objet relativement au premier système optique n'est pas un moteur pas à pas ou un actionneur utilisé comme un moteur pas à pas. Dans l'étape 530, au moins une série de données est issue du capteur optique alors que l'objet est en mouvement relativement au premier système optique. Ainsi, les données ne sont pas acquises ou collectées alors que l'objet est immobile, contrairement à une solution où l'objet serait déplacé entre deux phases successives durant lesquelles l'objet est immobile et durant lesquelles les données sont acquises ou collectées.

Dans cette troisième étape, l'obtention de l'au moins une série de données est avantageusement réalisée alors que l'objet est plongé dans le liquide 22. L'obtention des données est donc réalisée au travers de la paroi 211 du conteneur 21 et au travers du liquide. En cas de présence d'un deuxième système optique 12, les rayons lumineux ont également traversé la paroi 212 du conteneur.

Complémentairement, l'étape d'obtention comprend encore l'obtention d'au moins une deuxième série de données relatives à un étalon 91, 92 ou à une pige. Cette deuxième série de données concerne une dimension calibrée qui est donc connue précisément et permet de corriger, dans l'étape de traitement qui suit, la série de données comprenant plusieurs valeurs apparentes de l'au moins une dimension L.

Avantageusement, l'étape d'obtention comprend l'obtention d'au moins une série supplémentaire de données relatives à au moins une dimension L', L", ... supplémentaire de l'objet. Cette au moins une série de données supplémentaire peut concerner toute dimension de l'objet, comme un diamètre, une longueur, une largeur, une épaisseur, une profondeur, une hauteur, comprenant plusieurs valeurs apparentes de la dimension. Un avantage déterminant de l'invention est qu'elle permet d'acquérir plusieurs séries de données, relatives à la même dimension et/ou relatives à des dimensions différentes, lors de la même étape d'obtention, et donc qu'elle permet de déterminer plusieurs dimensions en une seule étape.

Dans une quatrième étape 540, on traite l'au moins une série de données pour quantifier ladite dimension L. Le traitement comprend la détermination de la valeur de la dimension L par calcul basé sur les valeurs apparentes de la dimension L obtenues précédemment.

Le calcul peut inclure un calcul de moyenne des valeurs apparentes, notamment la valeur déterminée ou calculée à l'issue de l'étape de traitement peut être la moyenne des valeurs apparentes de la série de données.

Alternativement ou complémentairement, le calcul peut inclure une interpolation des valeurs apparentes, notamment une interpolation polynomiale, et/ou une extraction d'extremum local. Ces calculs sont connus de l'homme du métier.

Alternativement ou complémentairement, le calcul peut inclure une correction des valeurs apparentes, basée sur une deuxième série de données concernant la dimension calibrée qui est donc connue précisément.

En option, dans une étape supplémentaire, la valeur de la dimension L ou des différentes dimensions peuvent être utilisées pour asservir la machine-outil, c'est-à-dire pour corriger les paramètres d'usinage afin de cibler au mieux les valeurs des dimensions désirées, par une boucle d'asservissement ou boucle fermée.

Ainsi, la mesure est effectuée selon les principes suivants :

- La pièce est mise en mouvement relatif par rapport à un plan de mesure 4 associé au premier système optique 11 (et correspondant à la distance de travail idéale) de manière à ce que la pièce passe par un « positionnement parfait », c'est-à-dire avec la dimension devant être mesurée se trouvant dans le plan de mesure 4.
- Durant toute la séquence de mouvement, le capteur du dispositif de mesure collecte plusieurs images (par exemple, 30 images par seconde) et l'élément d'acquisition extrait les valeurs apparentes (cotes apparentes) désirées.
- L'élément de traitement détermine l'évolution de la cote apparente en fonction des paramètres de mouvement de la pièce relativement au dispositif de mesure et procède ensuite à un ajustement numérique (fit), par exemple avec une approximation polynomiale de degré 2, 4, 6 ou 8 selon les cas.
- La fonction d'évolution, c'est-à-dire la relation liant la cote apparente à des données de position de la pièce relativement au dispositif de mesure, présente un extremum. On extrait de l'approximation polynomiale la valeur de l'extremum, qui est alors la valeur de mesure retenue, soit la mesure de la dimension.

La mesure en mouvement dynamique de la pièce permet de s'affranchir des erreurs de positionnement de la pièce dans le champ optique, qui sont principalement de deux types :

I. La distorsion des grandeurs apparentes en fonction de la distance de travail ;
II. Le gauchissement de la pièce dû à son orientation dans le champ optique (non perpendicularité de la dimension à mesurer vis-à-vis de la direction des rayons lumineux utilisés pour la mesure) ;

Ces différents effets sont illustrés sur les figures 3 à 5 et seront décrits plus en détail par la suite.

La mesure se fait dans un milieu qui permet de pallier aux problématiques liées à la présence d'un film liquide sur la pièce et sur les optiques du système de mesure. Si elle est couverte de liquide, comme c'est le cas en cours ou en fin d'usinage, la pièce à mesurer est introduite dans le conteneur du dispositif de mesure rempli d'un fluide qui permet d'éviter de devoir nettoyer et sécher la pièce.

Avantageusement, le procédé de mesure utilise le premier système optique 11 comprenant le capteur optique 111 associé à l'objectif 112 et le conteneur 21 contenant le liquide 22 d'usinage ou le liquide de nature chimique similaire dans lequel l'objet est plongé. Le procédé de mesure comprend donc avantageusement l'acquisition de données de dimension au travers de la paroi 211 du conteneur et du liquide.

Avantageusement encore, le procédé de mesure comprend l'utilisation de la source de lumière colimatée présentant le troisième axe optique 123 ou du deuxième système optique 12 d'éclairage télécentrique comprenant la source lumineuse 121 associée à l'objectif télécentrique 122 présentant le troisième axe optique 123. La source de lumière colimatée ou le deuxième système optique permet de créer un champ optique à rayons parallèles. L'objet placé dans ce champ arrête des rayons et une image en contre jour est ainsi formée au niveau du capteur 111.

L'invention porte également sur un procédé de fabrication d'un objet comprenant une mise en œuvre du procédé de mesure décrit précédemment et/ou l'utilisation d'un dispositif de mesure décrit précédemment. Ainsi, l'invention porte aussi sur un procédé de fabrication au cours duquel on met en œuvre le procédé de mesure selon l'invention et/ou on utilise le dispositif de mesure selon l'invention.

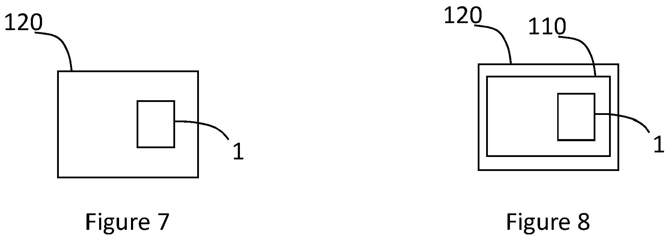

La pièce peut être un mouvement horloger 110 ou une pièce d'horlogerie 120, en particulier une montre-bracelet, comprenant un objet ou une pièce décrit précédemment. Les figures 7 et 8 représentent schématiquement des premier et deuxième modes de réalisation d'une pièce d'horlogerie fabriquée selon l'invention.

La solution est ainsi compatible avec l'environnement d'usinage (liquide de coupe) et rend possible de mesurer, *in situ* ou juste en sortie de machine, en quelques secondes, les diamètres et les longueurs des pièces usinées avec une résolution de l'ordre de 0.015 μm et une répétabilité de l'ordre de ±0.2 à 0.5μm.

Des essais ont été effectués avec deux types d'appareils :

- Un appareil Keyence TM-006 muni d'une optique télécentrique ayant un agrandissement de 0.4X et un champ optique correspondant de 6mm de diamètre.
- Un appareil permettant d'intégrer trois agrandissements de 0.5X, 1X et 2X, donnant 3 tailles de champ optique allant de 14 x 10.7mm à 3.6 x 2.7mm, avec une caméra de 1628 x 1238 pixels (2 millions de pixels) et une illumination à LED verte stabilisée.

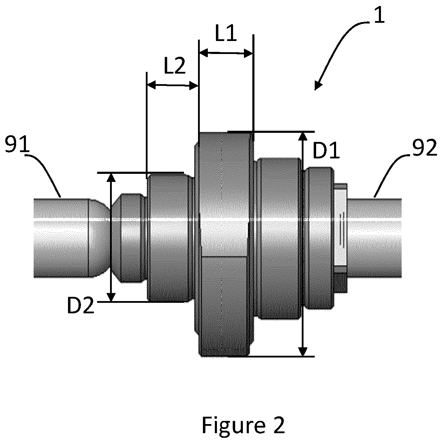

Un banc de test a permis de faire une première caractérisation des différents appareils utilisés ainsi que de caractériser l'effet du milieu de mesure, à savoir l'air, un liquide de coupe et un produit de nettoyage de type benzène. La pièce 1 était maintenue par deux pinces 91 et 92 de diamètre calibré, servant d'étalon de mesure et permettant de réaliser une mesure de référence en simultané avec la mesure de la pièce comme représenté sur la figure 2.

Les résultats de stabilité de mesure confirment la nature statistique gaussienne des mesures, ce qui permet d'utiliser la valeur moyenne de plusieurs images comme mesure de cotes. Une stabilité long terme de ±0.1μm (3 Sigma sur la mesure d'un diamètre) a été obtenue. Les résultats des tests de répétabilité se situent dans des valeurs inférieures à ±0.1μm.

La caractérisation de l'effet de la présence du liquide de coupe dans le dispositif de mesure avec un fluide d'usinage de type Blasomill B22 permet de constater que la présence de liquide d'usinage détériore les mesures mais de façon tout-à-fait acceptable. Avec des mesures moyennées sur 60 images, l'effet de la présence de liquide est quasiment imperceptible dans certains cas, ce même en utilisant l'agrandissement maximum de 2X, en principe le plus sensible à la présence de particules.

La figure 2 illustre un arbre de barillet, qui est un exemple typique d'objet à mesurer avec le dispositif de mesure décrit précédemment. On relève les caractéristiques typiques suivantes des objets pouvant être mesurés :

- Dimension des objets de 1mm à 20mm ;
- Intervalle de tolérance des cotes de ±1 à ±50μm ;
- Typologie large de caractéristiques à mesurer : longueur, portée, diamètre, chanfrein, carré, présence d'un élément saillant à la périphérie d'une pièce, notamment d'une pièce de révolution (par exemple un crochet)...

Des mesures prises avec différents moyens et dans différents milieux montrent que la valeur mesurée (extraite par analyse d'image) est bruitée, avec une répartition gaussienne. La dispersion est faible, nettement inférieure au μm. A partir de 15 mesures moyennées, la répétabilité statique (c'est-à-dire sans déplacement de la pièce, avec 60 secondes entre chaque mesure) atteint une plage inférieure à 0.1μm.

La pièce est mesurée dans un conteneur rempli d'un fluide d'usinage sans dégradation significative des performances du dispositif de mesure.

L'effet du liquide est sensible au niveau de la dispersion, qui augmente en moyenne de 50%. La répétabilité statique reste dans des niveaux tout-à-fait acceptables. Au niveau des valeurs mesurées, les résultats après calibration sont quasiment identiques à ceux dans l'air.

Si on modifie la position de la pièce par rapport au dispositif de mesure, les valeurs mesurées passent par des optimums qui sont les «valeurs vraies» au sens géométrique du terme (c'est-à-dire avec dégauchissement et focalisation optique). Cela permet de s'affranchir des erreurs dues au positionnement de la pièce. La valeur correcte au sens métrologique du terme peut être obtenue en calibrant le dispositif. Pour ce faire, on peut calibrer préalablement et/ou subséquemment le dispositif, ou on peut mesurer en simultané une pige ou un étalon 91, 92, par exemple.

L'effet de la distorsion des grandeurs en fonction de la distance de travail est illustré sur la figure 3. Le graphique indique en abscisses la distance de travail WD (exprimée relativement à la distance de travail idéale) et en ordonnées la grandeur apparente mesurée lors de la mesure d'au moins une dimension L d'un arbre de barillet.

L'effet de gauchissement de la pièce est dû à la non-perpendicularité de la dimension à mesurer relativement aux rayons lumineux du champ optique utilisé pour la mesure. La dimension ou cote apparente Lm de la dimension L est définie en fonction de l'angle α formé par la dimension à mesurer et la direction perpendiculaire à l'axe optique, et de la profondeur P de la pièce au niveau de la dimension, par l'équation :

$$Lm(\alpha) = L \cdot \cos(|\alpha|) + P \cdot \sin(|\alpha|).$$

Les dimensions mesurées subissent les effets mentionnés précédemment, qui se combinent linéairement, c'est-à-dire qui se superposent :

Maximum ou minimum à distance de travail optimale ;
Minimum ou maximum à inclinaison nulle.

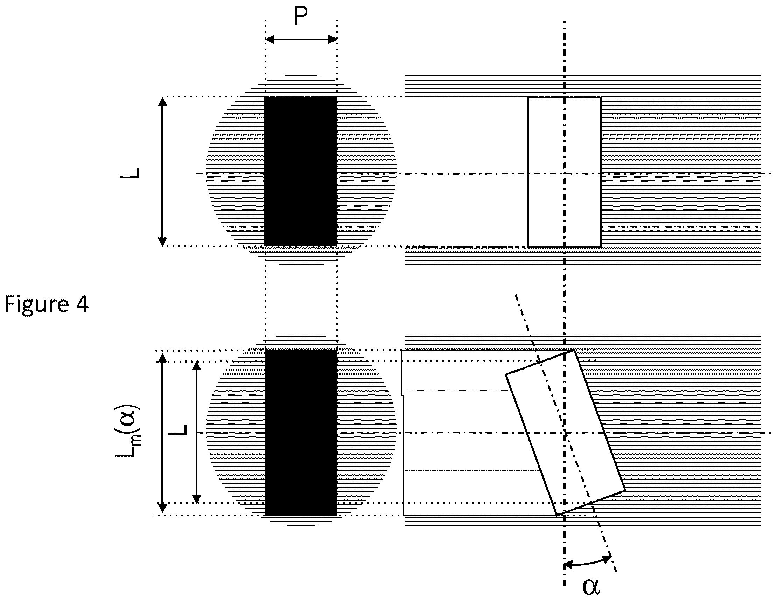

La figure 4 illustre un exemple de l'effet géométrique (dû à l'inclinaison T de la pièce) et l'effet de la distance de travail WD sur la mesure. L'effet est représenté en différence de longueur par rapport à la valeur nominale, en fonction de l'angle d'inclinaison de la pièce en abscisses et de la distance de travail en ordonnées.

Nous voyons donc que le dispositif de mesure permet de déterminer notamment les diamètres et longueurs d'un composant horloger de petite taille. La mesure est rapide et fiable, en particulier grâce à une acquisition d'images et une mesure des dimensions en dynamique alors que la pièce est en mouvement par rapport au champ optique du dispositif. Les dimensions exactes sont ensuite déterminées par traitements à partir des mesures effectuées sur les différentes images. Au final, le dispositif de mesure permet, à partir d'une multitude d'images floues, d'en déduire par traitement mathématique une image nette pour chaque dimension à mesurer. Autrement dit, pour une même dimension, une série de données définissant plusieurs valeurs différentes de la dimension est issue du capteur optique. Cette série est traitée pour obtenir la valeur exacte de la dimension.

Le grandissement du système optique peut être choisi de manière à ce que le capteur puisse acquérir l'image de l'entier de l'objet, sans devoir déplacer l'objet ou le capteur. Alternativement, le grandissement du système optique peut être choisi de manière à ce que le capteur puisse acquérir l'image de la partie de l'objet qui comprend les cotes critiques que l'on souhaite mesurer.

Comme vu précédemment, la mesure est effectuée dans un fluide d'usinage, ce qui simplifie beaucoup l'utilisation du dispositif dans un environnement de production industrielle.

Le principe de mesure peut être appliqué notamment aux composants de révolution, avec une symétrie cylindrique. Il est aussi envisageable de déterminer la concentricité de la pièce par rotation du composant selon son axe de symétrie, ainsi que de déterminer les dimensions de parties non cylindriques ou non symétriques, comme le carré ou le crochet d'un arbre de barillet. La mesure d'autres types de pièces est bien entendu aussi possible.

Dans toutes les réalisations selon l'invention, le capteur optique peut être un capteur optique à deux dimensions ou une caméra CMOS ou une caméra CCD

Dans toutes les réalisations selon l'invention, l'étape d'obtention peut comprendre l'obtention d'au moins une série de données relatives à un étalon 91, 92 ou à une pige.

Dans toutes les réalisations selon l'invention, le traitement peut comprendre la détermination de la valeur de la dimension par calcul basé sur les valeurs apparentes de la dimension, en utilisant l'au moins une série de données relatives à l'étalon 91, 92 ou à la pige.

Dans tout ce document, par « dimension d'un objet », on entend notamment sa longueur ou sa largeur ou sa profondeur ou son épaisseur ou sa hauteur ou encore son diamètre si c'est un objet ayant une forme de révolution.

La solution proposée permet:

- De s'affranchir de l'environnement défavorable de la zone d'usinage de la machine-outil, qui généralement dégrade la précision et la répétabilité des mesures. Ceci est fait en mesurant la pièce directement dans un fluide, qui est soit le fluide de lubrification ou d'usinage utilisé pour l'usinage, soit un autre fluide compatible ou de nature chimique similaire. Cette méthode permet des mesures optiques de qualité : en utilisant le fluide d'usinage comme milieu de mesure, on évite les problèmes de nettoyage de la pièce, les erreurs qui viennent de problèmes d'interface sur la pièce à mesurer (présence d'un film de liquide sur la pièce), et les problèmes liés à la propreté de l'optique dans le milieu d'usinage.

- D'effectuer un très grand nombre de mesures par intervalle de temps (la mesure ne dure que quelques dixièmes de secondes) grâce à l'utilisation d'une caméra haute résolution et haute fréquence et d'une intelligence d'analyse d'images très rapide. Ce principe permet soit de retenir uniquement la valeur moyenne de chaque dimension voulue, soit préférentiellement d'utiliser la valeur d'une courbe d'ajustement numérique des mesures, en particulier pour des pièces de petites dimensions, soit de combiner les deux méthodes. Cela assure une très grande fiabilité des résultats.

- D'effectuer les mesures des dimensions (par exemple, diamètres ou longueurs) de la pièce par l'utilisation d'une mesure mettant en œuvre une source de lumière colimatée, une optique télécentrique couplée à une caméra CCD ou CMOS haute résolution et haute fréquence et d'une cinématique de manipulation de la pièce ou du capteur permettant des mesures dynamiques des pièces. La mesure dynamique et le traitement des données permettent d'extraire une valeur de mesure correspondant à un alignement « parfait » de la pièce et d'éliminer les erreurs de focalisation optique.

- D'effectuer les mesures des dimensions à partir d'une seule série d'images, sans devoir revenir à la position « parfaite », correspondant notamment à l'inclinaison et à la distance de travail idéales (plan focal et inclinaison nulle), pour obtenir la valeur finale de la dimension à mesurer. Un tel repositionnement, qui est implémenté dans les machines de mesure actuelles, prend souvent beaucoup de temps au détriment de l'efficacité de la machine, et n'est jamais parfait à cause des erreurs de positionnement inhérentes à la précision finie et à l'hystérèse des moyens de déplacement. Cette erreur de repositionnement mène à une erreur de mesure inévitable sur la valeur finale de la dimension à mesurer.

- D'effectuer les mesures de plusieurs dimensions de l'objet en même temps, sur la base de la même série d'images, en effectuant un ajustement numérique sur les différentes dimensions apparentes en fonction de la position de l'objet dans le champ optique (inclinaison et distance de travail, notamment). Il n'y a donc pas besoin d'acquérir une image ou une série d'images spécifique pour chaque dimension à mesurer.

- D'atteindre des résolutions de l'ordre de 0.015 μm. La résolution de la mesure dépend de l'agrandissement optique, de la taille des pixels du capteur de la caméra et du nombre de nuances de gris à disposition. La résolution indiquée pourra être améliorée grâce à l'amélioration des caméras (densité de pixels plus élevée) et de la qualité des optiques.

- De s'affranchir des éventuelles déviations de la chaîne de mesure par une référence embarquée, mesurée périodiquement. La rapidité de mesure permet en effet de mesurer fréquemment une pièce étalon, et par là même de prévenir la plupart des dérives éventuelles du dispositif de mesure lui-même (mesure ou pilotage relatif). On assure ainsi une mesure relative par rapport à une référence étalon extrêmement précise.

- La solution de mesure pourrait être notamment utilisée dans toute machine d'usinage par enlèvement de matière ou dans toute machine de dépôt de matière.

- La solution de mesure pourrait être aussi utilisée pour réaliser un asservissement en boucle fermée de la machine-outil, afin de limiter et de corriger l'écart entre la dimension mesurée et sa valeur de consigne, quelles que soient les dérives ou perturbations externes.

Les avantages de l'approche, par rapport aux appareils existants, sont principalement :

- L'acquisition d'image se fait en mouvement ;
- L'acquisition d'image (mesure comprise) est en plein champ (pas de cinématique ou de sommation d'image) ;

- La possibilité d'incliner la pièce par rapport au système optique permet de s'affranchir d'un posage ;
- La mesure est dans le même environnement que le procédé de fabrication (usinage, dépôt de matière).

La solution présente aussi un autre avantage significatif : elle permet de mesurer plusieurs dimensions en même temps, c'est-à-dire qu'une seule mise en œuvre du procédé permet de générer plusieurs séries de données, toutes relatives à une dimension différente (longueur, diamètre, ou autre).

La combinaison du mouvement de la pièce et de l'acquisition d'image en continu permet de maîtriser :

- Les effets dus aux pièces : rapport diamètre/longueur, rayons d'outils, usure d'outils...
- La mesure de longueurs en recherchant la longueur minimale ou maximale en fonction de l'inclinaison.

## Revendications

1. Procédé de mesure d'au moins une dimension (L) d'un objet (1) relié à une machine d'usinage, par un posage, le procédé comprenant l'utilisation d'un premier système optique (11) comprenant un capteur optique (111) associé à un objectif (112) et d'un conteneur (21) contenant un liquide (22) d'usinage, dans lequel l'objet est plongé, le procédé de mesure comprenant l'acquisition de données de l'au moins une dimension au travers d'au moins une paroi (211) du conteneur et du liquide sans démontage préalable de l'objet de la machine, l'objet (1) présentant un premier axe (2) et le premier système optique (11) présentant un deuxième axe optique (113), l'acquisition de données étant faite alors que l'objet est en mouvement relativement au premier système optique, notamment en mouvement déplaçant angulairement le premier axe relativement au deuxième axe et/ou en mouvement déplaçant l'objet en rotation autour du premier axe et/ou en mouvement translatant l'objet le long du deuxième axe.

2. Procédé de mesure selon la revendication précédente, le procédé de mesure comprenant :

   - une étape de traitement de l'au moins une série de données pour quantifier ladite au moins une dimension.

3. Procédé de mesure selon la revendication précédente, **caractérisé en ce que** le capteur optique est associé à un objectif télécentrique (112).

4. Procédé de mesure selon la revendication 2 ou 3, **caractérisé en ce que** le procédé comprend l'utilisation d'une source de lumière colimatée présentant un troisième axe optique (123) ou d'un deuxième système optique (12) d'éclairage télécentrique comprenant une source lumineuse (121) associée à un objectif télécentrique (122) présentant un troisième axe optique (123), notamment un troisième axe confondu avec le deuxième axe.

5. Procédé de mesure selon l'une des revendications 2 à 4, **caractérisé en ce qu'**une série de données comprend plusieurs valeurs apparentes de l'au moins une dimension, chaque valeur apparente de la série de données étant notamment associée à une position donnée, voire unique, de l'objet par rapport au premier système optique et/ou **caractérisé en ce qu'**on obtient simultanément plusieurs séries de données issues du capteur optique et relatives à plusieurs dimensions, notamment à partir d'une même série d'images et d'une même phase de mouvement de l'objet par rapport au premier système optique.

6. Procédé de mesure selon l'une des revendications 2 à 5, **caractérisé en ce que** le traitement comprend la détermination de la valeur de l'au moins une dimension par calcul basé sur les valeurs apparentes de l'au moins une dimension, le calcul incluant un calcul de moyenne des valeurs apparentes et/ou le calcul incluant une interpolation des valeurs apparentes, notamment une interpolation polynomiale.

7. Procédé de mesure selon l'une des revendications 2 à 6, **caractérisé en ce que** l'étape d'obtention de l'au moins une série de données est réalisée alors que l'objet est plongé dans le liquide (22), l'obtention des données étant réalisée au travers de l'au moins une paroi (211) du conteneur (21) et au travers du liquide.

8. Système de mesure comprenant un dispositif (100) de mesure d'au moins une dimension (L) d'un objet et une machine d'usinage, le dispositif étant disposé relativement à la pièce et à la machine d'usinage de sorte que le posage de la pièce, qui est reliée à la machine d'usinage par ledit posage, n'est pas modifié par rapport à la machine d'usinage, le dispositif (100) de mesure d'au moins une dimension (L) de l'objet comprenant :

   - un premier système optique (11) comprenant un capteur optique (111) associé à un objectif (112), et
   - un conteneur (21) contenant un liquide d'usinage (22), le conteneur comprenant au moins une paroi (211) transparente,
   l'objet (1) présentant un premier axe (2), l'objectif (112) étant un objectif télécentrique (112) présentant un deuxième axe optique (113), le dispositif comprenant :

- un élément (31) d'acquisition de données issues du capteur optique,
- un élément (32) de traitement des données,

le dispositif comprenant un élément (41) de déplacement de l'objet relativement au premier système optique, notamment un élément de déplacement angulaire du premier axe relativement au deuxième axe et/ou un élément de déplacement de l'objet en rotation autour du premier axe et/ou un élément de translation de l'objet le long du deuxième axe.

9. Système de mesure selon la revendication 8, **caractérisé en ce que** le dispositif (100) comprend une source de lumière colimatée présentant un troisième axe optique (123) ou un deuxième système optique (12) d'éclairage télécentrique comprenant une source lumineuse (121) associée à un objectif télécentrique (122) présentant un troisième axe optique (123), notamment un troisième axe confondu avec le deuxième axe.

10. Système de mesure selon l'une des revendications 8 et 9, **caractérisé en ce que** les premier et deuxième axes sont orthogonaux ou sensiblement orthogonaux.

11. Procédé de fabrication d'un objet comprenant une mise en œuvre du procédé de mesure selon l'une des revendications 1 à 7 et/ou l'utilisation d'un système de mesure selon l'une des revendications 8 à 10.

**Patentansprüche**

1. Verfahren zum Messen mindestens einer Abmessung (L) eines mit einer Bearbeitungsmaschine verbundenen Objekts (1) durch eine Platzierung, wobei das Verfahren die Verwendung eines ersten optischen Systems (11) umfasst, das einen optischen Sensor (111) umfasst, der mit einem Objektiv (112) verbunden ist, sowie einen Behälter (21), der eine Bearbeitungsflüssigkeit (22) enthält, in die das Objekt eingetaucht ist, wobei das Messverfahren die Erfassung von Daten der mindestens einen Abmessung durch mindestens eine Wand (211) des Behälters und durch die Flüssigkeit ohne vorherige Demontage des Objekts von der Maschine umfasst, wobei das Objekt (1) eine erste Achse (2) und das erste optische System (11) eine zweite optische Achse (113) aufweist, wobei die Erfassung von Daten erfolgt, während sich das Objekt relativ zum ersten optischen System bewegt, insbesondere in einer Bewegung, die die erste Achse winkelmäßig relativ zur zweiten Achse verlagert und/oder in einer Bewegung, die das Objekt in Rotation um die erste Achse verlagert, und/oder in einer Bewegung, die das Objekt in Translation entlang der zweiten Achse verlagert.

2. Messverfahren nach dem vorhergehenden Anspruch, wobei das Messverfahren Folgendes umfasst:

- einen Schritt der Verarbeitung der mindestens einen Datenreihe zur Quantifizierung der mindestens einen Abmessung.

3. Messverfahren nach dem vorhergehenden Anspruch, **dadurch gekennzeichnet, dass** der optische Sensor mit einem telezentrischen Objektiv (112) verbunden ist.

4. Messverfahren nach Anspruch 2 oder 3, **dadurch gekennzeichnet, dass** das Verfahren die Verwendung einer kollimierten Lichtquelle mit einer dritten optischen Achse (123) oder eines zweiten telezentrischen Beleuchtungsoptiksystems (12) umfasst, das eine Lichtquelle (121) umfasst, die mit einem telezentrischen Objektiv (122) mit einer dritten optischen Achse (123) verbunden ist, insbesondere einer dritten Achse, die mit der zweiten Achse zusammenfällt.

5. Messverfahren nach einem der Ansprüche 2 bis 4, **dadurch gekennzeichnet, dass** eine Datenreihe mehrere scheinbare Werte der mindestens einen Abmessung umfasst, wobei jeder scheinbare Wert der Datenreihe insbesondere mit einer bestimmten oder sogar eindeutigen Position des Objekts in Bezug auf das erste optische System verbunden ist, und/oder **dadurch gekennzeichnet, dass** gleichzeitig mehrere Datenreihen erhalten werden, die vom optischen Sensor stammen und sich auf mehrere Dimensionen beziehen, insbesondere aus einer gleichen Bildreihe und aus einer gleichen Bewegungsphase des Objekts in Bezug auf das erste optische System.

6. Messverfahren nach einem der Ansprüche 2 bis 5, **dadurch gekennzeichnet, dass** die Verarbeitung die Bestimmung des Werts der mindestens einen Abmessung durch Berechnung auf der Grundlage der scheinbaren Werte der mindestens einen Abmessung umfasst, wobei die Berechnung eine Mittelwertbildung der scheinbaren Werte und/oder eine Interpolation der scheinbaren Werte, insbesondere eine polynomiale Interpolation, beinhaltet.

7. Messverfahren nach einem der Ansprüche 2 bis 6, **dadurch gekennzeichnet, dass** der Schritt des Erhaltens der mindestens einen Datenreihe durchgeführt wird, während das Objekt in die Flüssigkeit (22) eingetaucht ist, wobei das Erhalten der Daten durch die mindestens eine Wand (211) des Behälters (21) und durch die Flüssigkeit hindurch erfolgt.

8. Messsystem mit einer Vorrichtung (100) zum Messen mindestens einer Abmessung (L) eines Objekts und einer Bearbeitungsmaschine, wobei die Vorrichtung relativ zum Werkstück und zur Bearbeitungsmaschine so angeordnet ist, dass die Platzierung des Werkstücks, das durch die Platzierung mit der Bearbeitungsmaschine verbunden ist, in Bezug auf die Bearbeitungsmaschine nicht verändert wird, wobei die Vorrichtung (100) zum Messen mindestens einer Abmessung (L) des Objekts Folgendes umfasst:

> - ein erstes optisches System (11) mit einem optischen Sensor (111), der mit einem Objektiv (112) verbunden ist, und
> - einen Behälter (21), der eine Bearbeitungsflüssigkeit (22) enthält, wobei der Behälter mindestens eine transparente Wand (211) umfasst, wobei das Objekt (1) eine erste Achse (2) aufweist, wobei das Objektiv (112) ein telezentrisches Objektiv (112) ist, das eine zweite optische Achse (113) aufweist, wobei die Vorrichtung Folgendes umfasst:
>
>> - ein Element (31) zur Erfassung von Daten, die vom optischen Sensor stammen,
>> - ein Element (32) zur Verarbeitung der Daten,
>
> wobei die Vorrichtung ein Element (41) zur Bewegung des Objekts relativ zum ersten optischen System umfasst, insbesondere ein Element zur winkelmäßigen Bewegung der ersten Achse relativ zur zweiten Achse und/oder ein Element zur Bewegung des Objekts in Rotation um die erste Achse und/oder ein Element zur Bewegung des Objekts in Translation entlang der zweiten Achse.

9. Messsystem nach Anspruch 8, **dadurch gekennzeichnet, dass** die Vorrichtung (100) eine kollimierten Lichtquelle mit einer dritten optischen Achse (123) oder ein zweites telezentrisches Beleuchtungsoptiksystem (12) umfasst, das eine Lichtquelle (121) umfasst, die mit einem telezentrischen Objektiv (122) mit einer dritten optischen Achse (123) verbunden ist, insbesondere einer dritten Achse, die mit der zweiten Achse zusammenfällt.

10. Messsystem nach einem der Ansprüche 8 und 9, **dadurch gekennzeichnet, dass** die erste und zweite Achse orthogonal oder im Wesentlichen orthogonal sind.

11. Verfahren zur Herstellung eines Objekts, das die Durchführung des Messverfahrens gemäß einem der Ansprüche 1 bis 7 und/oder die Verwendung eines Messsystems gemäß einem der Ansprüche 8 bis 10 umfasst.

## Claims

1. Method for measuring at least one dimension (L) of an object (1) joined to a machine tool, by an attachment, the method comprising the use of a first optical system (11) comprising an optical sensor (111) associated with a lens (112) and of a container (21) containing a machining liquid (22), in which the object is submerged, the measuring method comprising acquisition of data on at least one dimension through at least one wall (211) of the container and the liquid without prior removal of the object from the machine, the object (1) having a first axis (2) and the first optical system (11) having an optical second axis (113), the data acquisition being carried out while the object is making a movement relative to the first optical system, and in particular making a movement such as to angularly move the first axis relative to the second axis and/or a movement such as to rotate the object about the first axis and/or a movement such as to translate the object along the second axis.

2. Measuring method according to the preceding claim, the measuring method comprising:

> - a step of processing at least one data series to quantify said at least one dimension.

3. Measuring method according to the preceding claim, **characterized in that** the optical sensor is associated with a telecentric lens (112).

4. Measuring method according to Claim 2 or 3, **characterized in that** the method comprises the use of a collimated light source having an optical third axis (123) or of a lighting telecentric second optical system (12) comprising a light source (121) associated with a telecentric lens (122) having an optical third axis (123), in particular a third axis coincident with the second axis.

5. Measuring method according to any of Claims 2 to 4, **characterized in that** a data series comprises a plurality of apparent values of the at least one dimension, each apparent value of the data series in particular being associated with a given, or even unique, position of the object with respect to the first optical system and/or **characterized in that** a plurality of data series delivered by the optical sensor and relating to a plurality of dimensions are obtained simultaneously, in particular from the same series of images and from the same phase of movement of the object with respect to the first optical system.

6. Measuring method according to any of Claims 2 to 5, **characterized in that** the processing comprises determining the value of the at least one dimension by calculation based on the apparent values of the at least one dimension, the calculation including a calculation of an average of the apparent values and/or the calculation including an interpolation of the apparent values, in particular a polynomial interpolation.

7. Measuring method according to any of Claims 2 to 6, **characterized in that** the step of obtaining the at least one data series is carried out while the object is submerged in the liquid (22), the data being obtained through the at least one wall (211) of the container (21) and through the liquid.

8. Measuring system comprising a device (100) for measuring at least one dimension (L) of an object and a machine tool, the device being arranged relative to the workpiece and to the machine tool in such a way that the attachment of the workpiece, which is joined to the machine tool by said attachment, is not modified with respect to the machine tool, the device (100) for measuring at least one dimension (L) of the object comprising:

   - a first optical system (11) comprising an optical sensor (111) associated with a lens (112), and
   - a container (21) containing a machining liquid (22), the container comprising at least one transparent wall (211),
   the object (1) having a first axis (2), the lens (112) being a telecentric lens (112) having an optical second axis (113), the device comprising:

      - an element (31) for acquiring data delivered by the optical sensor,
      - an element (32) for processing the data,

   the device comprising an element (41) for moving the object relative to the first optical system, and in particular an element for angularly moving the first axis relative to the second axis and/or an element for rotating the object about the first axis and/or an element for translating the object along the second axis.

9. Measuring system according to Claim 8, **characterized in that** the device (100) comprises a collimated light source having an optical third axis (123) or a lighting telecentric second optical system (12) comprising a light source (121) associated with a telecentric lens (122) having an optical third axis (123), in particular a third axis coincident with the second axis.

10. Measuring system according to either of Claims 8 and 9, **characterized in that** the first and second axes are orthogonal or substantially orthogonal.

11. Method for manufacturing an object comprising implementation of the measuring method according to any of Claims 1 to 7 and/or use of a measuring system according to any of Claims 8 to 10.

Figure 1

Figure 2

Figure 3

Figure 4

Figure 5

EP 4 124 823 B1

Figure 6

```
┌─────────────────────────┐
│  Fournir un dispositif de │
│         mesure            │
└─────────────────────────┘
         510
           │
┌─────────────────────────┐
│   Mettre ou maintenir    │
│   l'objet en mouvement   │
│ relativement au dispositif│
│        de mesure         │
└─────────────────────────┘
         520
           │
┌─────────────────────────┐
│   Recueillir au moins une │
│  série de données issues  │
│    du capteur optique     │
└─────────────────────────┘
         530
           │
┌─────────────────────────┐
│   Traiter l'au moins une  │
│    série de données       │
└─────────────────────────┘
         540
```

EP 4 124 823 B1

Figure 8

Figure 7

**EP 4 124 823 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2008102040 B
- FR 2646904
- US 2002041381 A
- US 2012194673 A
- JP 2003042894 A
- JP S6491007 A
- FR 1039322 A
- DE 2148972 A1